Europäisches Patentamt

European Patent Office

Office européen des brevets

(19)

(11) Veröffentlichungsnummer: **0 121 123**
**B1**

(12)

# EUROPÄISCHE PATENTSCHRIFT

(45) Veröffentlichungstag der Patentschrift:
25.10.89

(51) Int. Cl.⁴: **B 27 C 5/02**, B 23 Q 1/18,
B 23 Q 1/02

(21) Anmeldenummer: **84102302.1**

(22) Anmeldetag: **03.03.84**

(54) Koordinatenwagen für eine in der Holzbearbeitung einsetzbare Oberfräse.

(30) Priorität: **04.03.83 DE 3307808**
**13.09.83 DE 3333039**

(43) Veröffentlichungstag der Anmeldung:
**10.10.84 Patentblatt 84/41**

(45) Bekanntmachung des Hinweises auf die Patenterteilung:
**25.10.89 Patentblatt 89/43**

(84) Benannte Vertragsstaaten:
**AT BE CH FR GB IT LI LU NL SE**

(56) Entgegenhaltungen:
**EP-A-0 050 544**
**DE-A-3 025 974**
**FR-A-2 060 287**
**GB-A-13 659**
**GB-A-514 542**
**GB-A-942 268**
**US-A-1 673 163**
**US-A-3 124 018**
**US-A-3 447 420**
**US-A-3 981 605**

(73) Patentinhaber: **Koukal, Anton, Schumannweg 9,
D-7325 Boll (DE)**

(72) Erfinder: **Koukal, Anton, Schumannweg 9, D-7325
Boll (DE)**

(74) Vertreter: **Lutz, Johannes Dieter, Dr.,
Hohentwielstrasse 41, D-7000 Stuttgart 1 (DE)**

**Beschreibung**

Die Erfindung betrifft einen Koordinatenwagen für eine in der Holzbearbeitung einsetzbare Oberfräse mit den weiteren im Oberbegriff des Patentanspruchs 1 aufgeführten gattungsbestimmenden Merkmalen.

Koordinatenwagen dieser Art, die mit Hilfe einer numerischen Steuerungseinrichtung oder einer analog arbeitenden Nachlauf-Steuereinrichtung eine weitgehend selbsttätige Bearbeitung eines Werkstückes ermöglichen, das durch geeignete Überlagerung der Längs- und Querwagenbewegungen innerhalb des vorgesehenen Arbeitsraumes beliebige Bewegungen ausführen kann, sind bislang als in das Maschinengestell integrierte Maschinenelemente ausgebildet. Mit einem solchen Koordinatenwagen versehene Oberfräsen sind zwar innerhalb des Arbeitsbereiches des Koordinatenwagens flexibel einsetzbar, haben jedoch den Nachteil, daß der Arbeitsbereich sowohl in X- als auch in Y-Richtung begrenzt ist, während bei Oberfräsen, die anstelle eines Koordinatenwagens einen stabilen Maschinentisch haben, ein sehr viel größerer Arbeitsbereich vorhanden ist und insbesondere auch sehr lange Werkstücke bearbeitet werden können, da eine Begrenzung nur in einer Koordinatenrichtung gegeben ist, die durch die Dimensionierung des Maschinengestells vorgegeben ist.

Mit einer mit einem Koordinatenwagen ausgerüsteten Oberfräse kann daher nur eine begrenzte Zahl der in einem Schreinereibetrieb anfallenden typischen Arbeiten durchgeführt werden.

Sofern die wirtschaftliche Kraft eines Schreinereibetriebes nicht ausreicht, um sowohl eine Oberfräse mit Koordinatenwagen als auch eine Oberfräse mit festem Maschinentisch finanzieren zu können, ist ein solcher Betrieb gezwungen, sich für den zweitgenannten Maschinentyp zu entscheiden, mit dem Nachteil, daß in vielen Fällen eine unrationelle Arbeitsweise in Kauf genommen werden muß.

Aufgabe der Erfindung ist es daher, einen Koordinatenwagen für Oberfräsen zu schaffen, der in Verbindung mit einer Oberfräse mit Maschinentisch benutzbar, an dieser einfach ansetzbar und von dieser erforderlichenfalls wieder abnehmbar ist und dabei kostengünstig herstellbar ist.

Diese Aufgabe wird durch die im kennzeichnenden Teil des Patentanspruchs 1 genannten Merkmale der Erfindung gelöst.

Der erfindungsgemäße Koordinatenwagen ist konstruktionsbedingt ein vergleichsweise leichtes Maschinenelement, das einfach und schnell am Maschinentisch einer konventionellen Oberfräse lagerichtig befestigt werden kann. Die Einsatzmöglichkeiten einer mit dem erfindungsgemäßen Koordinatenwagen ausrüstbaren Oberfräse werden dadurch wesentlich erweitert und die Wirtschaftlichkeit ihres Einsatzes erheblich verbessert. Obwohl nur eine Längsführungswelle vorgesehen ist, ist die Arbeitsgenauigkeit mit derjenigen eines üblichen Koordinatenwagens durchaus vergleichbar, da die erfindungsgemäß vorgesehene Art der Befestigung des Koordinatenwagens am Maschinentisch einfache und zuverlässige Justagemöglichkeiten eröffnet.

Durch die Merkmale des Anspruchs 2 ist eine Gestaltung des erfindungsgemäßen Koordinatenwagens angegeben, bei der dessen Querwagen an fest mit dem Längswagen verbundenen Führungswellen verschiebbar geführt ist.

In Verbindung damit ist durch die Merkmale des Anspruchs 3 eine günstige und raumsparende Anordnung von Lagerblöcken angegeben, die die Führungslager des Querwagens enthalten.

Alternativ hierzu ist durch die Merkmale des Anspruchs 4 eine bevorzugte Gestaltung des erfindungsgemäßen Querwagens angegeben, bei der die Führungswellen querwagenfest angeordnet sind und in Lagerblöcken des Längswagens verschiebbar gelagert sind. Dadurch wird erreicht, daß über den Arbeitstisch des Querwagens hinausragende Teile seiner Hohlprofilträger und der Führungswellen nur einseitig an dem Querwagen vorhanden sind.

Die in Verbindung hiermit gemäß den Merkmalen des Anspruchs 5 vorgesehene Anordnung der am Längswagen vorgesehenen Lagerblöcke hat den Vorteil, daß der Arbeitsdruck des Werkzeuges in jeder Stellung des Werkstückes in gleicher Weise gut aufgefangen werden kann, was der Arbeitsgenauigkeit einer mit dem erfindungsgemäßen Querwagen ausgerüsteten Oberfräse zugute kommt.

Bei der gemäß Anspruch 6 vorgesehenen Gestaltung von Lagerblöcken, die die Lagerschalen der Gleitlager aufnehmen, in denen der Längswagen und/oder der Querwagen verschiebbar gelagert ist, wird deren lagerichtige Anordnung wesentlich erleichtert.

Durch die Merkmale des Anspruchs 7 ist eine Gestaltung von Halteelementen für die fest mit dem Querwagen verbundenen Querwellen angegeben, die ebenfalls auf einfache Weise und mit hoher Präzision deren lagerichtige Anordnung ermöglicht und mit billig herstellbaren Teilen realisierbar ist.

In Kombination hiermit oder alternativ dazu kann die lagerichtige Anordnung der Führungswellen mit exakt parallelem Verlauf auch in der durch die Merkmale des Anspruchs 8 angegebenen Weise erzielt werden.

Durch die Merkmale des Anspruchs 9 wird insbesondere erreicht, daß trotz der für den Längs- und den Querwagen des erfindungsgemäßen Koordinatenwagens vorgesehenen Leichtbauweise eine hohe Fertigungsgenauigkeit erzielt wird, die auch eine entsprechend hohe Arbeitsgenauigkeit gewährleistet. Dies gilt insbesondere hierbei für die zu den Führungen exakt parallele Anordnung der Tischplatte des Querwagens.

Durch die Merkmale des Anspruchs 10 wird erreicht, daß der Koordinatenwagen auf einfache Weise an gängige Maschinentisch-Abmessungen angepaßt werden kann.

Durch die Merkmale der Ansprüche 11 und 12 sind für eine niedrige Bauhöhe des erfindungsgemäßen Koordinatenwagens günstige Gestaltungen und Anordnungen der zum Antrieb des Längs- und Querwagens vorgesehenen Antriebseinheiten angegeben.

Durch die Merkmale des Anspruchs 13 wird mit einfachen Mitteln eine für die Arbeitsgenauigkeit günstige Spielfreiheit der Längs- und Querwagenantriebe erzielt.

Durch die Merkmale der Ansprüche 14 und 15 sind alternative Möglichkeiten der Anordnung eines fotoelektrischen Tastkopfes angegeben, der im Rahmen einer mit Abtastung einer Zeichnungsvorlage arbeitenden Nachlaufsteuerung vorgesehen sein kann.

Weitere Einzelheiten und Merkmale der Erfindung ergeben sich aus der nachfolgenden Beschreibung zweier spezieller Ausführungsbeispiele anhand der Zeichnung. Es zeigen:

Fig. 1 einen erfindungsgemäßen Koordinatenwagen in einer stark vereinfachten, schematischen Ansicht von oben,

Fig. 2 den Koordinatenwagen gemäß Fig. 1 in Ansicht in Richtung des Pfeils II der Fig. 2,

Fig. 3 und 4 in abgebrochener, vereinfachter Seiten- bzw. Stirnansicht die Abstützung des Längswagens des Koordinatenwagens gemäß Fig. 1 am Maschinentisch einer Oberfräse,

Fig. 5 Einzelheiten des Querwagenantriebes des Kreuzwagens gemäß Fig. 1 in einer Ansicht in Richtung des Pfeils V der Fig. 1,

Fig. 6 den Querwagenantrieb gemäß Fig. 5 in vereinfachter, abgebrochener Ansicht von oben,

Fig. 7 Einzelheiten der Lagerung des Querwagens an einer seiner Führungswellen und deren Fixierung am Längswagen des erfindungsgemäßen Koordinatenwagens,

Fig. 8a eine bevorzugte Gestaltung eines erfindungsgemäßen Koordinatenwagens in einer der Fig. 1 entsprechenden, vereinfachten Darstellung,

Fig. 8b den Koordinatenwagen gemäß Fig. 8a in einer der Fig. 2 entsprechenden, vereinfachten Darstellung und

Fig. 8c einen Schnitt längs der Linie VIII - VIII der Fig. 8b.

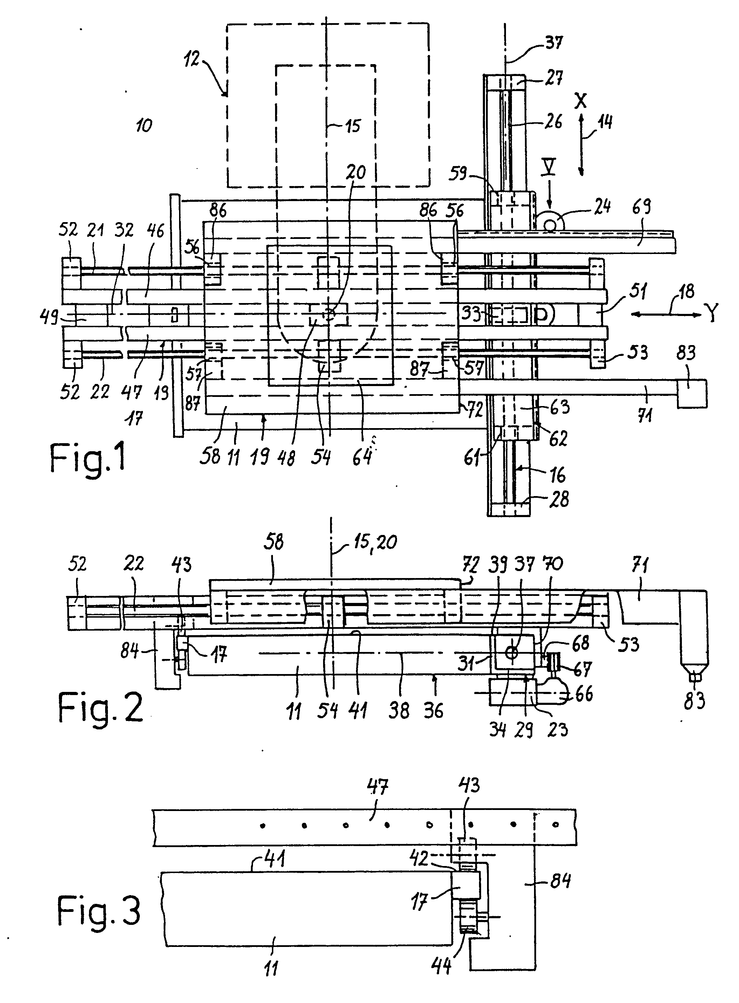

Die Fig. 1 und 2, auf deren Einzelheiten ausdrücklich verwiesen sei, zeigen einen erfindungsgemäßen Koordinatenwagen 10, der an dem Maschinentisch 11 einer sogenannten Oberfräse 12, die, abgesehen von dem Maschinentisch lediglich durch ihren gestrichelt angedeuteten Maschinenständer repräsentiert ist, montiert ist. Außerdem ist strichpunktiert die vertikale Mittelebene 15 des Maschinenständers eingezeichnet, in der auch die Drehachse 20 des nicht dargestellten Fräswerkzeuges liegt.

Der Koordinatenwagen 10 umfaßt einen insgesamt mit 13 bezeichneten Längswagen, der in der durch den Pfeil 14 der Fig. 1 wiedergegebenen X-Richtung hin- und herverfahrbar an fest mit dem Maschinentisch 11 verbundenen Führungs- und Stützelementen 16 bzw. 17 angeordnet ist, und einen rechtwinklig zur X-Richtung, in der durch den Pfeil 18 markierten Y-Koordinatenrichtung an dem Längswagen 13 hin- und herverfahrbaren, insgesamt mit 19 bezeichneten Querwagen. Dieser Querwagen 19 ist seinerseits an zwei im Abstand zueinander parallel verlaufenden, fest mit dem Längswagen 13 verbundenen Führungswellen 21 und 22 gleitend gelagert. Zum Antrieb des Längswagens 13 und des Querwagens 19 vorgesehene elektrische Antriebsmotoren sind jeweils mit 23 bzw. 24 bezeichnet.

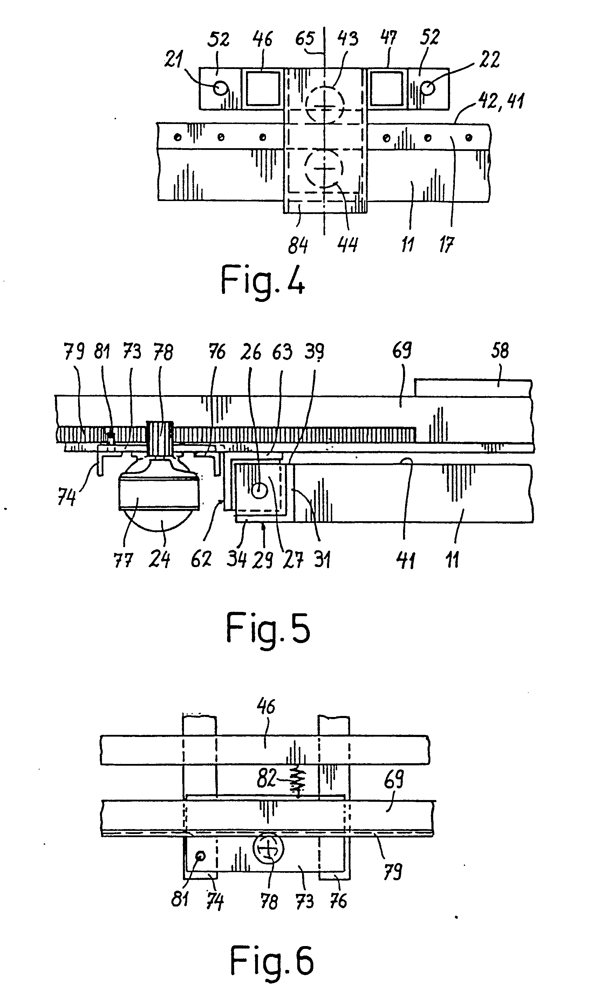

Als Führungselement 16 für die in Richtung des Pfeils 14 ablaufenden Bewegungen des Koordinatenwagens 10 ist eine geschliffene Stahlwelle 26 vorgesehen, die an Endlaschen 27 und 28 eines sich in der Längsrichtung 14 erstreckenden Winkelprofils 29 abgestützt ist, das mit seinem einen, nach oben weisenden Schenkel 31 an der gemäß Fig. 1 rechten, in Längsrichtung verlaufenden Stirnfläche des Maschinentisches 11 fest angeschraubt ist. Dieses Winkelprofil 29 ist symmetrisch bezüglich der vertikalen Längsmittelebene 32 des Maschinentisches 11 angeordnet und ist zusätzlich mit einer die Stahlwelle 26 mittig unterstützenden Lasche 33 versehen. Die Anordnung des Winkelprofils 29 ist, wie am besten aus der Fig. 2 ersichtlich, so getroffen, daß sein horizontaler Querschenkel 34 etwa in Höhe der unteren Begrenzungsfläche 36 des Maschinentisches 11 verläuft, während die zentrale Achse 37 der Führungswelle 26 etwa in Höhe der horizontalen Mittelebene 38 des Maschinentisches 11 angeordnet ist. Die obere Stirnkante 39 des vertikalen Schenkels 31 des Winkelprofils 29 schließt, wie am besten aus der in größerem Maßstab gezeichneten Detaildarstellung der Fig. 5, auf deren Einzelheiten ebenfalls ausdrücklich verwiesen wird, ersichtlich, bündig mit der oberen horizontalen Begrenzungsfläche 41 des Maschinentisches 11 ab.

Das an der der Längsführung 16 gegenüberliegenden Seite des Maschinentisches 11 angeordnete Stützelement 17 ist als ein an seiner oberen und seiner unteren Stirnfläche plangeschliffener Stahlstab mit rechteckigem Querschnitt ausgebildet, dessen obere Begrenzungsfläche 42 ihrerseits bündig an die Oberfläche 41 des Maschinentisches 11 anschließt. An dieser oberen Begrenzungsfläche 42 ist der Längswagen 13, wie am besten aus den Fig. 3 und 4 ersichtlich, mit einer Stützrolle 43 abgestützt. Durch eine der Stützrolle 43 gegenüber an der Unterseite des Stützstabes 17 abstützbare Gegenrolle 44 wird verhindert, daß der Längswagen um die Führungswelle 26 gekippt werden kann.

Der Längswagen 13 hat mehr im einzelnen den folgenden Aufbau, zu dessen Erläuterung auch auf die Einzelheiten der Fig. 4 verwiesen sei:

Er umfaßt als tragende Elemente zwei im Abstand in Y-Richtung 18 parallel zueinander verlaufende, langgestreckte, dünnwandige Hohlprofilträger 46 und 47, die zentral und im Bereich ihrer Enden durch Hohlprofilstücke 48 bzw. 49 und 51 entsprechender Querschnittsformen fest miteinander verbunden sind, so daß insgesamt ein verwindungssteifer, tragfähiger Profilrahmen geschaffen ist. An den einander gegenüberliegenden äußeren Längsseiten sind die beiden Hohlprofilträger 46 und 47 im Bereich ihrer freien Enden und in der Mitte mit seitlich abstehenden Halteblöcken 52 und 53 bzw. 54 versehen, die die Führungswellen 21 und 22 tragen. Der in Verschieberichtung des Querwagens 19 gesehene Abstand je zweier benachbarter Halteblöcke 52 und 54 bzw. 54 und 53 (Fig. 1) ist um mindestens die in Verschieberichtung 18 des Querwagens gemessene Länge von Lagerschalen 56 und 57, mittels derer der Querwagen 19 an diesen Lagerwellen 21 bzw. 22 gelagert ist, größer als der in Richtung des Pfeils 18 mögliche Verschiebeweg des Querwagens 19; die zur - verschiebbaren - Lagerung des Querwagens 19 an der einen Führungswelle 21 vorgesehenen Lagerschalen 56 und die entsprechenden, zur Lagerung an der anderen Führungswelle 22 vorgesehenen Lagerschalen 57 sind jeweils an den einander gegenüberliegenden Rändern einer das zu bearbeitende Werkstück tragenden Tischplatte 58 des Querwagens 19 angeordnet, wobei die in der Verschieberichtung 18 gemessehe Länge dieser Tischplatte wiederum um die genannte Länge der Lagerschalen 56 bzw. 57 größer ist als der in Richtung des Pfeils 18 mögliche Verschiebeweg des Querwagens 19.

Die Lager 59 und 61, mit denen der Längswagen 13 an der Führungswelle 26 hin- und hervorfahrbar gelagert ist, sind an den einander gegenüberliegenden Enden eines Winkelprofils 62 angeordnet, das mit seinem horizontalen Schenkel 63 (Fig. 5) fest mit den Längsträgern 46 und 47 des Längswagens 13 verbunden ist. Dieses Winkelprofil 62, das sich, in Verschieberichtung 14 des Längswagens gesehen, zu beiden Seiten seiner zwischen den beiden Hohlprofilträgern 46 und 47 verlaufenden Längsmittelebene 65 (Fig. 4) erstreckt, ist in seiner Länge so bemessen, daß der Längswagen um die volle, in der X-Bewegungsrichtung 14 gemessene Länge der Querwagen-Tischplatte 58 verfahrbar ist.

Die Abstützung des Längswagens 13 an dem Stützelement 17 und seine Führung 16 an der gegenüberliegenden Seite des Maschinentisches 11 sind so angeordnet und dimensioniert, daß der lichte Abstand der Hohlprofilträger 46 und 47 von der Oberseite 41 des Maschinentisches ca. 0,5 bis 1 cm betragen.

Desgleichen sind die Lager 56 und 57 des Querwagens 19, mit denen dieser an den Führungswellen 21 und 22 verschiebbar gelagert ist, so dimensioniert, daß die Tischplatte 58 des Querwagens 19 ihrerseits ca. 0,5 bis 1 cm oberhalb der Hohlprofilträger 46 und 47 des Längswagens 13 verläuft. Dank des exakt parallelen Verlaufs der Führungswellen 21 und 22 des Längswagens können auch noch kleinere lichte Abstände zwischen den Hohlprofilträgern 46 und 47 und der Querwagen-Tischplatte 58 realisiert werden. Bei einer vertikalen Höhe der Hohlprofilträger 46 und 47 des Längswagens 13 von 70 mm und einer Dicke der das zu bearbeitende Werkstück tragenden Querwagen-Tischplatte 58 von 15 mm, wobei diese Querwagen-Tischplatte 58 als eine massive Aluminiumplatte ausgebildet ist, beträgt die von der Oberseite 41 des Maschinentisches 11 aus gemessene Gesamthöhe des Koordinatenwagens 10 dann lediglich ca. 100 mm. Die zwischen der Querwagen-Tischplatte 58 und dem Fräswerkzeug der Oberfräse 12 verbleibende lichte Höhe des Arbeitsraumes wird daher durch den Koordinatenwagen 10 nur unwesentlich eingeschränkt, weshalb sich dieser insbesondere für die Nachrüstung üblicher Oberfräsen, die einen feststehenden oder in einem begrenzten Bereich auf- und abbewegbaren Maschinentisch haben, besonders gut eignet. Dies wird auch dadurch begünstigt, daß die Konstruktion des Koordinatenwagens einschließlich der noch zu erläuternden Antriebe für den Längswagen 13 und den Querwagen 19 sehr leicht ist, so daß die Belastung des Maschinentisches durch den nachträglich angesetzten Koordinatenwagen 10 auf jeden Fall innerhalb hinnehmbarer Grenzen bleibt, wenn der Koordinatenwagen 10, wie in der Fig. 1 dargestellt, so dimensioniert ist, daß ein Werkstück 64 innerhalb der gesamten Grundfläche des Maschinentisches 11 verfahrbar ist. Falls erforderlich, kann, wenn der Koordinatenwagen 10 auf größere, im Meterbereich liegende Verfahrwege ausgelegt ist, an den Enden der Längsführung 16 jeweils eine vertikale Stütze vorgesehen werden, durch die der Koordinatenwagen zusätzlich am Fußboden abstützbar ist.

Der zum Antrieb des Längswagens 13 vorgesehene elektrische Antriebsmotor 23 ist, wie am besten aus der Fig. 2 ersichtlich, unterhalb des seitlich an dem Maschinentisch 11 befestigten und an diesem festgeschraubten Winkelprofils 29 angeordnet. Er ist bei horizontalem Verlauf seiner Abtriebswelle mit einem als Untersetzungsgetriebe ausgebildeten Winkelgetriebe 66 versehen, auf dessen vertikal verlaufender Abtriebswelle ein Ritzel 67 sitzt, das mit einer entlang des unteren Randes des nach unten weisenden vertikalen Profilschenkels 70 des Winkelprofils 62 verlaufenden und fest mit diesem verbundenen Zahnstange 68 kämmt.

Der Querwagen 19 umfaßt, wie aus der Fig. 1 ersichtlich, zwei in seitlichem Abstand parallel zu den Hohlprofilträgern 46 und 47 des Längswagens 13 verlaufende, an der Unterseite der Querwagen-Tischplatte 58 angeordnete und fest mit dieser verbundene Hohlprofilträger 69 und 71, die an der der Längsführung 16 zugewandten Seite der Querwagen-Tischplatte um etwas mehr als deren in Querrichtung 18 gemessene Länge über deren Längsrand 72 hinausragen. Diese Hohlprofilträger 69 und 71, an denen die Lager 56 und 57 befestigt sind, mit denen der Querwagen 19 an den Führungswellen 21 und 22 verschiebbar gelagert ist, haben dieselbe Dimensionierung wie die Hohlprofilträger 46 und 47 des Längswagens 13.

Der zum Antrieb des Querwagens 19 vorgesehene Elektromotor 24 ist, wie aus den Fig. 5 und 6 in Einzelheiten ersichtlich, wiederum mit horizontalem Verlauf seiner Abtriebswelle an der Unterseite einer Platte 73 befestigt, die auf den horizontalen Profilschenkeln zweier Winkelprofile 74 und 76 aufliegt, die die beiden Hohlprofilträger 46 und 47 des Längswagens außerhalb des an der Führungswelle 26 gelagerten Winkelprofils 62 miteinander verbinden und einseitig über den einen Hohlprofilträger 46 hinausragen, wobei die Platte 73 auf den hinausragenden Abschnitten der beiden Winkelprofile 74 und 76 aufliegt und in einem kleinen lichten Abstand von dem einen Hohlprofilträger 69 des Querwagens 19 angeordnet ist. Der Antriebsmotor 24 ist wiederum mit einem Winkelgetriebe 77 gekoppelt, auf dessen vertikal angeordneter Abtriebswelle ein Ritzel 78 sitzt, das mit einer Zahnstange 79 kämmt, die entlang des unteren Randes des des freien Abschnittes des Hohlprofilträgers 69 des Querwagens 19 verlaufend angeordnet und fest mit diesem verbunden ist.

Die Platte 73 ist um einen an dem äußeren Winkelprofil 74 angeordneten Zapfen 81 drehbar. Mittels einer vorgespannten Zugfeder 82 wird die Platte 73 stets in diejenige Stellung gedrängt, in der das Ritzel 78 der an der Platte 73 befestigten Antriebseinheit 24, 77 in praktisch spielfrei kämmendem Eingriff mit der Zahnstange 79 gehalten wird.

Die Antriebseinheit 23, 66 des Längswagens 13 ist, wie nicht gesondert dargestellt, auf eine hierzu analoge Weise in Eingriff mit der Zahnstange 68 des Winkelprofils 62 gehalten, über das der Längswagen 13 an der Stahlwelle 26 des Längsführungselements 16 hin- und herverfahrbar gelagert ist.

Am Ende des freien Abschnittes des anderen Hohlprofilträgers 71 des Querwagens 19 ist der Abtastkopf 83 einer zur selbsttätigen Steuerung der Werkstückbearbeitung vorgesehenen fotoelektrischen Nachlaufsteuerung angeordnet. Eine mit diesem Abtastkopf 83 abtastbare Zeichnungsvorlage ist in diesem Falle, wie aus der Fig. 2 ersichtlich, seitlich unterhalb der Längsführung 16 des Längswagens 13 feststehend angeordnet. Es versteht sich, daß ein Abtastkopf auch oberhalb der Bearbeitungsebene seitlich vom Maschinenkopf feststehend angeordnet sein könnte und dafür eine mit der Querwagen-Tischplatte 58 verfahrbare Zeichnungsvorlage benutzt werden könnte, die ihrerseits auf einer seitlich von der Querwagen-Tischplatte 58 angeordneten Ablagefläche liegt.

Um den Koordinatenwagen 10 auf einfache Weise an verschiedene Größen des Maschinentisches 11 anpassen zu können, sind an den Hohlprofilträgern 69 und 71 des Querwagens in einem geeigneten Rastermaß Querbohrungen vorgesehen, durch die zur Befestigung der Querwagen-Tischplatte 58 vorgesehene Schraubbolzen hindurchsteckbar sind, so daß die Querwagen-Tischplatte in den vorgesehenen Raster-Abstandsschritten an den Hohlprofilträgern 69 und 71 festgelegt werden kann. Desgleichen kann in den entsprechenden Schrittweiten das die Stützrolle 43 und die Gegenrolle 44 tragende Längswagenteil 84 entlang der Hohlprofilträger 46 und 47 des Längswagens 13 versetzt werden (Fig. 3).

Der Koordinatenwagen 10 wird zweckmäßigerweise jeweils so an dem Maschinentisch 11 montiert, daß bezogen auf die Fräserachse der Querwagentisch 58 um jeweils gleich große Hubwege in Richtung des Pfeils 18 gemäß Fig. 1, d. h. in Y-Richtung nach links und rechts bzw. in Richtung des Pfeils 14 gemäß Fig. 1, d. h. in X-Richtung, vor- und zurückverschiebbar ist.

Der erfindungsgemäße Koordinatenwagen 10 ist in Leichtbauweise hergestellt, in dem Sinne, daß die Hohlprofilträger 46 und 47 sowie 69 und 71 seines Längswagens 13 bzw. seines Querwagens 19 als dünnwandige Schweißteile aus einem ca. 1,5 mm starken Stahlblech gefertigt sind. Lediglich die Winkelprofile 29 und 62 der Längsführung 16 sind als relativ dickwandige, gewalzte Winkelprofile mit einer Schenkeldicke von ca. 10 mm ausgebildet. Um trotz dieser Gestaltung der Hohlprofilträger 46 und 47 sowie 69 und 71, an denen die Führungswellen 21 und 22 befestigt sind bzw. die Querwagen-Tischplatte 58 exakt eben angeordnet sein muß, umfangreiche und kostenintensive Bearbeitungen zu vermeiden, die für die erforderliche Parallelität der Führungswellen 21 und 22 sowie die Parallelität der Querwagen-Tischplatte 58 zu diesen Führungswellen 21 und 22 erforderlich wären, sind mehr im einzelnen folgende Maßnahmen getroffen:

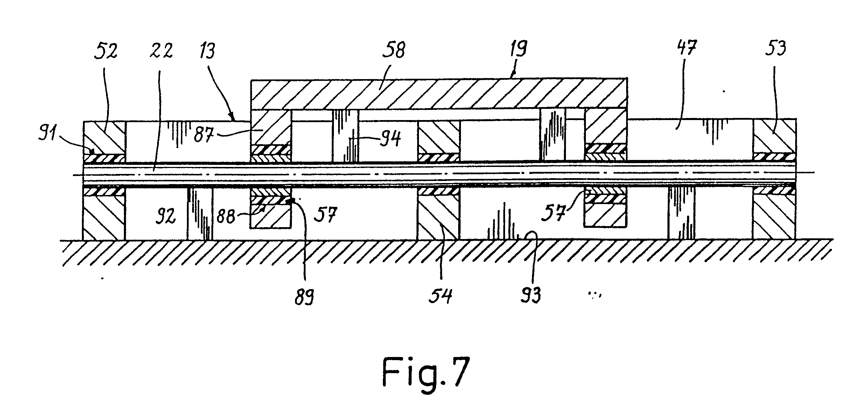

Die die Führungswellen 21 und 22 teilweise oder ganz umschließenden Lagerschalen 56 bzw. 57, mittels derer der Querwagen 19 auf dem Längswagen 13 in Richtung des Pfeils 18 verschiebbar gelagert ist, sind in Lagerblöcke 86 bzw. 87 eingegossen (Fig. 7), die, wie anhand der Fig. 1 erläutert, an den einander gegenüberliegenden Innenseiten der Hohlprofilträger 69 bzw. 71 und/oder der Querwagen-Tischplatte 58 angeschweißt bzw. befestigt sind. Der Durchmesser der die Lagerschalen 56 und 57 aufnehmenden Bohrungen 88 der Lagerblöcke 86 und 87 ist etwas größer als der Außendurchmesser der Lagerschalen 56 und 57, so daß zwischen den Wänden der Bohrungen 88 und den äußeren Mantelflächen der Lagerschalen 56 und 57 ein im wesentlichen ringzylindrischer Zwischenraum 89 verbleibt, der mittels eines Kunstharzes ausgegossen werden kann. Desgleichen sind die Führungswellen 21 und 22 an den Halteblöcken 52, 53 und 54, die endständig bzw. mittig an den einander gegenüberliegenden Außenseiten der Hohlprofilträger 46 und 47 des Längswagens 13 angeordnet sind, in Bohrungen 91 eingegossen, deren lichter Innendurchmesser ebenfalls etwas größer ist als der Durchmesser der Führungswellen 21 bzw. 22. Als Gußmasse eignet sich ein selbsthärtendes Kunstharz, z. B. ein Epoxidharz.

Zum lagerichtigen Eingießen der Führungswellen 21 und 22 in die Halteblöcke 52, 53 und 54 des Längswagens 13 bzw. der Lagerschalen 56 und 57 in die Lagerblöcke 86 und 87 des Querwagens 19 kann z. B. so verfahren werden, daß die Führungswellen 21 und 22 in exakt paralleler Anordnung, wie anhand der Fig. 7 schematisch angedeutet, über Endmaße 92 an einer Richtplatte 93 abgestützt werden, und der Querwagen 19 über weitere Endmaße 94 an den Führungswellen 21 und 22 mit exakt parallelem Verlauf seiner Tischplatte 58 zu den Führungswellen 21 und 22 abgestützt wird und sodann die in den Bohrungen 91 der Halteblöcke 52, 53 und 54 und den Bohrungen 88 der Lagerblöcke 86 und 87 des Querwagens 19 verbleibenden Hohlräume mit dem geeigneten Kunstharz vergossen werden.

Auf eine zur vorstehend erläuterten analogen Weise kann auch die führungsgerechte Fixierung der Längsführungswelle 26 an dem am Maschinentisch 11 befestigten Winkelprofil 29 und die Lagerung des Längswagens 13 an dieser Führungswelle 26 realisiert sein.

Zweckmäßig ist es weiter, wenn zwischen der Querwagen-Tischplatte 58 und den Hohlprofilträgern 69 und 71 des Querwagens, an denen die Tischplatte 58 festgeschraubt wird, gegebenenfalls vorhandene Spalte ebenfalls mit Kunstharz ausgegossen bzw. verfüllt werden, damit eine großflächige Abstützung der Tischplatte 58 an diesen Hohlprofilträgern 69 und 71 gewährleistet ist und diese in Leichtbauweise erstellten Hohlprofilträger 69 und 71 sich beim Anschrauben der Tischplatte 58 nicht verformen können.

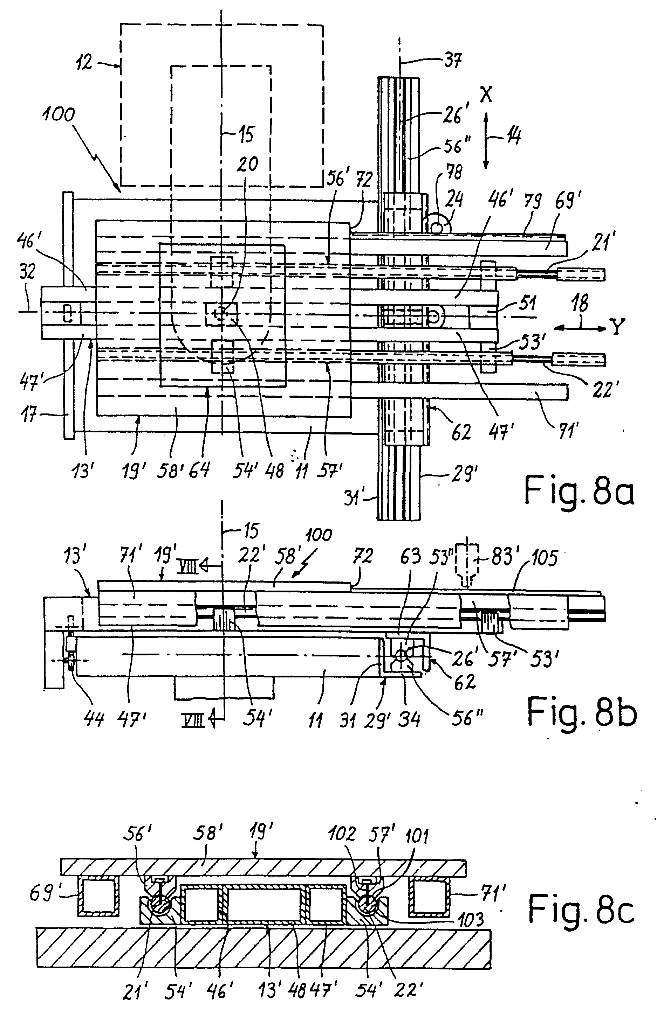

Anhand der Fig. 8a bis 8c, auf deren Einzelheiten wiederum ausdrücklich verwiesen sei, wird im folgenden eine weitere Ausführungsform eines erfindungsgemäßen Koordinatenwagens 100 erläutert, der hinsichtlich seines Einsatzzweckes dem Koordinatenwagen 10 gemäß den Fig. 1 bis 7 entspricht. Demgemäß sind für Bau- und Funktionselemente des Koordinatenwagens 100 gemäß den Fig. 8a bis 8b, die mit solchen des Koordinatenwagen 10 gemäß den Fig. 1 bis 7 bau bzw. funktionsanalog sind, die entsprechenden, mit einem Strich versehenen Bezugszeichen verwendet, während für bau- und funktionsgleiche Elemente beider Koordinatenwagen 100 bzw. 10 dieselben Bezugszeichen verwendet sind.

Der Koordinatenwagen 100 gemäß den Fig. 8a bis 8c unterscheidet sich vom Koordinatenwagen 10 im wesentlichen nur dadurch, daß die die Querführung des Querwagens 19' vermittelnden Führungswellen 21' und 22' fest mit dem Querwagen 19' des Koordinatenwagens 100 verbunden sind und daß die Lager 53' und 54', in denen die Querführungswellen 21' und 22' in Y-Richtung 18 hin- und herverschiebbar gelagert sind, fest an den sich in Y-Richtung erstreckenden Hohlprofilträgern 46' bzw. 47' des Längswagens 13' des Koordinatenwagens 100 angeordnet sind, der im übrigen, abgesehen davon, daß an dem Längswagen 13' auch nicht Halteblöcke 52, 53 und 54 (Fig. 1) vorgesehen sind, in seinem Aufbau völlig dem Längswagen 13 des Koordinatenwagens 10 gemäß den Fig. 1 und 2 entspricht, so daß insoweit auf die dem Koordinatenwagen 10 zugeordneten Beschreibungsteile verwiesen werden kann. Die Führung und der Antrieb des Längswagens 13' in der X-Koordinatenrichtung 14 sowie dessen Befestigung und lagesichere Abstützung am Maschinentisch 11 können auf genau dieselbe Weise realisiert sein wie beim Längswagen 13 des Koordinatenwagens 10. Dasselbe gilt bezüglich des Antriebes des Querwagens 19' in der Y-Koordinatenrichtung 18.

Die Tischplatte 58' des Querwagens 19' des Koordinatenwagens 100 ist als stabile Aluminiumplatte ausgebildet, die eine Dicke von ca. 15 bis 20 mm hat. Die Unter- und die Oberseite dieser Tischplatte 58' sind sehr genau planparallel geschliffen. An der Unterseite der Tischplatte 58' sind in der am besten aus der Fig. 8c ersichtlichen Anordnung die in Y-Richtung 18 verlaufenden, in Leichtbauweise erstellten Hohlprofilträger 69' und 71' befestigt, z. B. angeschraubt. Die Hohlprofilträger 69' und 71' ragen über die gemäß Fig. 8a rechte, in X-Richtung verlaufende Stirnfläche 72 der Tischplatte um eine Strecke hinaus, die etwa der in Y-Richtung gemessenen Länge der Tischplatte 58' des Querwagens 19' entspricht und erstrecken sich, unterhalb der Tischplatte 58' über deren gesamte, in Y-Richtung gemessene Länge.

Desgleichen erstrecken sich die Führungswellen 21' und 22' des Querwagens 19' über die gesamte, in Y-Richtung 18 gemessene Länge der Tischplatte 58' und ragen seitlich über deren rechte Endstirnfläche 72 um eine Strecke hinaus, die beim dargestellten Ausführungsbeispiel ebenfalls der in Y-Richtung 18 gemessenen Länge der Tischplatte 58' entspricht.

Zur Befestigung der Führungswellen 21' und 22' an dem Tisch 58' vorgesehene Halteelemente bzw. -blöcke 56' und 57' sind als sich über die gesamte Länge der Führungswellen erstreckende, prismatische Aluminium-Profilstäbe ausgebildet. Sie sind mit einer horizontalen Längsfläche unmittelbar an der Unterseite der Tischplatte 58 anliegend, an dieser befestigt, z. B. angeschraubt. Die als Halteelemente 56' und 57' vorgesehenen Profilstäbe haben je eine nach unten offene Rille, mit, im Querschnitt gesehen, kreisbögenförmig gekrümmter Rillenkontur, deren Krümmung der Mantelkrümmung der Führungswellen 21' und 22' entspricht. In diese Rillen 101 sind, an deren Boden satt anliegend, die Führungswellen 21' und 22' eingesetzt und mittels die Halteprofilstäbe 56' bzw. 57' von oben her durchquerender Schraubbolzen 102, die in radial verlaufende Gewindebohrungen der Führungswellen 21' und 22' eingreifen, auf ihrer gesamten Länge in den Rillen 101 fest eingespannt gehalten. Der Umfangsbereich, mit dem die Führungswellen 21' und 22' an den gekrümmten Rillenböden der Rillen 101 der Profilstäbe 56' und 57' anliegen, beträgt ca. 90°.

An die in Y-Richtung verlaufenden, wiederum in Leichtbauweise hergestellten Hohlprofilträger 46' und 47' sind in der aus der Fig. 8c ersichtlichen Anordnung Lagerblöcke 53' und 54' seitlich abstehend angesetzt, die nach oben offene Lagerschalen 103 haben, die einen den Rillen 101 der Halteprofilstäbe 56' und 57. gegenüberliegenden, unteren, kreissektorförmigen Umfangsbereich der Führungswellen 21' und 22', der größer als 180° ist und beim dargestellten Ausführungsbeispiel etwa 240° beträgt, umgreifen.

Zwei dieser Lagerblöcke, beim dargestellten Ausführungsbeispiel die Lagerblöcke 54' sind so angeordnet, daß ihre der Schnittebene VIII - VIII der Fig. 8b bzw. der Fig. 8c entsprechende, vertikale Quermittelebene mit der die Werkzeugachse 20 enthaltenden, vertikalen Mittelebene 15 des Maschinengestells der Oberfräse 12 zusammenfällt. Mindestens zwei weitere Lagerblöcke 53' sind in der am besten aus der Fig. 8a ersichtlichen Anordnung an den freien Enden der Hohlprofilträger 46' und 47' des Längswagens 13' angeordnet, wobei der in Y-Richtung gemessene Abstand zwischen den Lagerblöcken 53' und den Lagerblöcken 54' etwa der in dieser Richtung gemessenen Länge des Querwagentisches 58 entspricht. Zwischen den Lagerblöcken 54' und 53', können, im Abstand über die Länge des zwischen diesen verlaufenden Abschnittes der Hohlprofilträger 46' und 47' des Längswagens 13' verteilt, weitere Lagerblöcke vorgesehen sein.

Die anhand der Fig. 8b und 8c geschilderte Gestaltung der Halteelemente 56' und 57' für die Führungswellen 21' und 22' kann auch im Rahmen der Längsführung des Längswagens 13' vorgesehen sein, wobei ein als Halteelement für die Längsführungswelle 26' benutzter Profilstab 56" hier zweckmäßigerweise am unteren Querschenkel 34 des am Maschinentisch 11 befestigten Winkelprofils 29 festgelegt ist und den Lagerblöcken 53' und 54' entsprechende Lagerblöcke 53" am oberen, horizontalen Schenkel 63 des Winkelprofils 62 befestigt sind, über das die Hohlprofilträger 46' und 47' des Längswagens 13' miteinander verbunden sind.

Weiter können auch beim Koordinatenwagen 100 die Lagerblöcke 53', 54' und 53", wie in Verbindung mit dem Koordinatenwagen 10 anhand der Fig. 7 geschildert, mit in die Lagerblöcke 53', 54' bzw. 53" eingegossenen Lagerschalen versehen sein, um die genaue Justage der verschiedenen Führungen zu erleichtern.

Auf die seitlich über die Endstirnfläche 72 des Querwagentisches 58' hinausragenden Abschnitte der Hohlprofilträger 69' und 71' ist eine weitere, leichte Tischplatte 105 aufgesetzt, auf der eine Zeichnungsvorlage befestigt werden kann, die mittels eines feststehend angeordneten, zur selbsttätigen Steuerung des Bearbeitungsvorganges vorgesehenen fotoelektrischen Tastkopfes 83' abtastbar ist.

Anstelle von Halteelementen 56' und 57', die sich über die gesamte Länge der Führungswellen 21' und 22' erstrecken, können auch im Abstand über deren Länge verteilt angeordnete Halteteile mit dem für die Halteelemente 56' und 57' geschilderten Profilquerschnitt vorgesehen sein.

Solche Halteblöcke sind dann in dem seitlich von der Endstirnfläche 72 des Querwagentisches 58' angeordneten Bereich an der weiteren Tischplatte 105 befestigt, die dann zweckmäßigerweise als eine ca. 5 bis 10 mm dicke Aluminiumplatte ausgebildet ist.

**Patentansprüche**

1. Koordinatenwagen für eine in der Holzbearbeitung einsetzbare Oberfräse, mit dem ein Werkstück in der Arbeitsebene in zwei zueinander senkrechten Koordinatenrichtungen gesteuert entlang einer vorgesehenen Fräskontur bzw. -bahn verfahrbar ist, wobei der Koordinatenwagen einen in X-Richtung verfahrbaren Längswagen umfaßt, der an einer maschinengestellfesten Führungseinrichtung in der X-Richtung gesteuert hin- und herverfahrbar ist und einen an den Längswagen in Y-Richtung geführt hin- und herverfahrbaren Querwagen, auf dem das zu bearbeitende Werkstück festlegbar angeordnet ist, dadurch gekennzeichnet, daß der Längswagen (13; 13') zwei in horizontalem seitlichem Abstand zueinander angeordnete, sich mit parallelem Verlauf in Y-Richtung (18) erstreckende, in Leichtbauweise ausgeführte Hohlprofilträger (46 und 47; 46' und 47') umfaßt, die zu einem verwindungs- und biegesteifen Rahmen miteinander verbunden sind, der mit im Abstand voneinander angeordneten Lagern (59 und 61; 53") an einer seitlich an einem Maschinentisch (11) der Oberfräse (12) lösbar angebrachten und unterhalb des Niveaus der Tischoberseite angeordneten Führungswelle (26; 26') verschiebbar geführt ist und an der gegenüberliegenden Seite des Maschinentisches (11) mit einer Stützrolle (43) an einem seitlich an diesem parallel zur Führungswelle (26; 26') verlaufend lösbar befestigten Stützstab (17) abgestützt ist, daß der an dem Längswagen (13; 13') in Y-Richtung (18) geführt verschiebbare Querwagen (19; 19') zwei in seitlichem Abstand angeordnete, in Y-Richtung (18) parallel verlaufende Hohlprofilträger (69 und 71; 69' und 71') umfaßt, die mittels einer die Längswagen-Hohlprofilträger (46 und 47; 46' und 47') in einem geringen lichten Abstand von z. B. 0,5 bis 1 cm überquerenden Tischplatte (58; 58') fest miteinander verbunden sind, wobei die Hohlprofilträger (69 und 71; 69' und 71') in einem seitlichen Abstand von den jeweils benachbarten Hohlprofilträgern (46 bzw. 47; 46' bzw. 47') des Längswagens (13; 13') verlaufen, und daß die zur Abstützung des Querwagens (19; 19') und dessen Führung am Längswagen (13; 13') vorgesehenen Führungselemente - zwei Führungswellen (21 und 22; 21' und 22'), die sich in Y-Richtung (18) erstrecken, sowie Halteblöcke (52, 53, 54; 56', 57') für die Führungswellen (21 und 22; 21' und 22') und Lagerblöcke (56 und 57; 53' und 54') für die verschiebbare Lagerung des Querwagens (19;

19') in den zwischen den Hohlprofilträgern (46 und 69 bzw. 47 und 71; 46' und 69' bzw. 47' und 71') des Längswagens (13; 13') und des Querwagens (19; 19') verbleibenden Zwischenräumen angeordnet sind, wobei die Führungswellen (21 und 22; 21' und 22') etwa in Höhe der horizontalen Längsmittelebene der Hohlprofilträger (46 und 47; 46' und 47') des Längswagens (13; 13') verlaufen.

2. Koordinatenwagen nach Anspruch 1, dadurch gekennzeichnet, daß die beiden Führungswellen (21 und 22) längswagenfest an seitlich von den Hohlprofilträgern (46 und 47) des Längswagens (13) abstehenden Halteblöcken (52, 53, 54) gehalten sind, und daß der Querwagen (19) mittels im Abstand voneinander angeordneter Lager (56) an der einen Führungswelle (21) und mittels entsprechender Lager (57) an der anderen Führungswelle (22) verschiebbar gelagert ist.

3. Koordinatenwagen nach Anspruch 2, dadurch gekennzeichnet, daß die Lager (56 und 57) des Querwagens (19) enthaltende Lagerblöcke (86 und 87) an den einander zugewandten inneren Längsseiten der Hohlprofilträger (69 und 71) des Querwagens (19) angeordnet sind.

4. Koordinatenwagen nach Anspruch 1, dadurch gekennzeichnet, daß die beiden Führungswellen (21' und 22') querwagenfest angeordnet und an von dem Querwagentisch (58') nach unten abstehenden und an diesem befestigten Halteblöcken (56' und 57') fixiert sind und daß an den Hohlprofilträgern (46' und 47') des Längswagens (13') seitlich angeordnete Lagerblöcke (53' und 54') vorgesehen sind, in denen die Führungswellen (21' und 22') verschiebbar gelagert sind.

5. Koordinatenwagen nach Anspruch 4, dadurch gekennzeichnet, daß zwei zur verschiebbaren Lagerung je einer der Führungswellen (21' und 22') vorgesehene Lagerblöcke (54') so angeordnet sind, daß die Werkzeugachse (15) der Oberfräse (12) in der gemeinsamen vertikalen Quermittelebene dieser beiden Lagerblöcke (54') liegt, und daß zwei weitere, zur verschiebbaren Lagerung je einer der Führungswellen (21' und 22') vorgesehene Lagerblöcke (53') des Längswagens (13') an den der Längsführungseinrichtung (26', 62) benachbarten Enden der Hohlprofilträger (46' und 47') des Längswagens (13') angeordnet sind.

6. Koordinatenwagen nach einem der vorhergehenden Ansprüche, dadurch gekennzeichnet, daß die Lagerschalen von Gleitlagern, mit denen der Längswagen (13; 13') an der Längsführungswelle (26; 26') und/oder der Querwagen (19; 19') an dem Längswagen (13; 13') verschiebbar gelagert ist, in Bohrungen von Lagerblöcken eingegossen sind, deren lichter Durchmesser größer ist als der Außendurchmesser der Lagerschalen.

7. Koordinatenwagen nach einem der vorhergehenden Ansprüche 4 bis 6, dadurch gekennzeichnet, daß die Führungswellen (21' und 22') an profilstabförmigen Halteblöcken (56' und 57') befestigt sind, die nach unten offene Aufnahmerillen (101) mit kreisabschnittsförmigem lichten Querschnitt haben, an deren gewölbtem Boden die Wellen (21' und 22') mit einem oberen, kreissektorförmigen Teil ihres Umfangs, der kleiner als 180° ist, satt anliegen, und daß die an den Längswagen (13') angeordneten Gleitlager mit Lagerschalen (103) versehen sind, welche die Führungswellen (21' und 22') auf einem mehr als 180° betragenden unteren Sektorbereich ihres Umfangs umgreifen.

8. Koordinatenwagen nach einem der vorhergehenden Ansprüche 1 bis 6, dadurch gekennzeichnet, daß die Führungswelle (26) des Längswagens (13; 13') und/oder die Querwagen-Führungswellen (21 und 22; 21' und 22') in Bohrungen von Halteblöcken (28 und 59 bzw. 52, 53 und 54 bzw. 53' und 54') eingegossen sind, deren lichter Durchmesser größer ist der Durchmesser der Führungswellen (26 bzw. 21 und 22 bzw. 21' und 22').

9. Koordinatenwagen nach einem der vorhergehenden Ansprüche, dadurch gekennzeichnet, daß zwischen dem Querwagentisch (58; 58') und den diesen tragenden Hohlprofilträgern (69 und 71; 69' und 71') des Querwagens (19; 19') verbleibende Spalte mit einer selbsthärtenden Kunststoffharzmasse vergossen sind.

10. Koordinatenwagen nach einem der vorhergehenden Ansprüche, dadurch gekennzeichnet, daß der in Y-Richtung gemessene Abstand zwischen der Längsführungseinrichtung (26, 62; 26', 62') und dem die Stützrolle (43) tragenden Längswagenteil (84) einstellbar ist.

11. Koordinatenwagen nach einem der vorhergehenden Ansprüche, dadurch gekennzeichnet, daß ein zum Antrieb des Längswagens (13; 13') vorgesehener elektrischer Antriebsmotor (23) unterhalb eines die Längsführungswelle (26; 26') tragenden, mit seinem aufragenden Schenkel (31) am Maschinentisch (11) befestigbaren Winkelprofils (29; 29') angeordnet ist und über ein Winkelgetriebe ein um eine vertikale Achse drehbares Ritzel (67) antreibt, das mit einer Zahnstange (68) kämmt, die entlang des unteren Randes des nach unten weisenden Schenkels eines Winkelprofils (62) verläuft, das die Längswagen-Profilträger (46 und 47; 46' und 47') an deren Unterseite außerhalb des Bereichs des Maschinentisches (11) miteinander verbindet und die Lager (59 und 61; 53'') trägt, mit denen der Längswagen (13; 13') an der Längsführungswelle (26; 26') gelagert ist.

12. Koordinatenwagen nach einem der vorhergehenden Ansprüche, dadurch gekennzeichnet, daß ein zum Antrieb des Querwagens (19; 19') vorgesehener elektrischer Antriebsmotor (24) seitlich außerhalb des Maschinentisches (11) unterhalb der Hohlprofilträger (46 und 47; 46' und 47') des Längswagens (13; 13') angeordnet und mit diesem verbunden ist und ein um eine vertikale Achse drehbares Ritzel (78) antreibt, das mit einer Zahnstange (79) kämmt, die entlang des unteren Randes des freien Endabschnittes des einen Hohlprofilträgers (69; 69') des Querwagens (19; 19') verläuft und fest mit diesem verbunden ist.

13. Koordinatenwagen nach Anspruch 11 oder Anspruch 12, dadurch gekennzeichnet, daß das Antriebsritzel (67 und/oder 78) des Längswagen-Antriebsmotors (23) und/oder des Querwagen-Antriebsmotors (24) durch die Wirkung einer vorgespannten Feder in kämmenden Eingriff mit der Antriebszahnstange (68 bzw. 79) gedrängt ist.

14. Koordinatenwagen nach einem der vorhergehenden Ansprüche, dadurch gekennzeichnet, daß ein im Rahmen einer Nachlaufsteuerung vorgesehener fotoelektrischer Abtastkopf (83) am freien Ende eines der beiden Hohlprofilträger (69 oder 71; 69' oder 71') des Querwagens (19; 19') angeordnet ist, wobei eine mittels des Tastkopfes (83) abtastbare Zeichnungsvorlage auf einer unterhalb des Tastkopfes (83) angeordneten Ablage aufliegt.

15. Koordinatenwagen nach einem der vorhergehenden Ansprüche 1 bis 13, dadurch gekennzeichnet, daß ein mit dem Maschinengestell der Oberfräse fest verbundener fotoelektrischer Tastkopf (83') einer Nachlaufsteuerung vorgesehen ist, und daß für eine mittels des Tastkopfes abtastbare Zeichnungsvorlage eine seitlich von dem Arbeitstisch (58; 58') des Querwagens (19; 19') angeordnete und mit diesen bewegbare Ablage (105) vorgesehen ist.

**Claims**

1. Coordinate carriage for a routing machine suited for use in wood processing, by which a workpiece can be displaced in the working plane in a controlled manner along the intended milling contour or path in coordinate directions extending perpendicularly relative to each other, the coordinate carriage comprising a longitudinal carriage arranged for displacement in X direction and for being moved to and fro in the X direction in a controlled manner along guide means fixed to the machine frame, and a cross-feed carriage that can be moved to and fro on the longitudinal carriage in the Y direction in guided relationship and on which the workpiece to be processed can be arranged in fixed relationship, characterized in that the longitudinal carriage (13; 13') comprises two lightconstruction hollow-section beams (46 and 47; 46' and 47') arranged at a horizontal lateral distance relative to each other and extending in parallel in the Y direction (18), which beams are interconnected so as to form a frame which is resistant to torsion and bending and which is guided for displacement by mutually spaced bearings (59 and 61; 53") on a guide shaft (26; 26') mounted detachably on the side of the machine table (11) of the routing machine (12), below the level of the table top, and supported, on the opposite side of the machine table (11) by a supporting roller (53) on a supporting rod (17) mounted detachably on the side of the machine table and extending in parallel to the guide shaft (26; 26'), that the cross-feed carriage (19; 19') mounted for guided displacement in the Y direction (18) along the longitudinal carriage (13; 13') comprises two laterally spaced hollow-section beams (69 and 71; 69' and 71') extending in parallel in the Y direction (18), which beams are firmly interconnected by means of a table plate (58; 58') extending across the hollow-section beams (46 and 47; 46' and 47') of the longitudinal carriage at a small clearance of, for example, 0.5 to 1 cm, the hollow-section beams (69 and 71; 69' and 71') extending at a lateral distance from the neighboring hollow-section beams (46 or 47; 46' or 47') of the longitudinal carriage (13; 13'), and that the guide elements provided for supporting the cross-feed carriage (19; 19') and for guiding it on the longitudinal carriage (13; 13') - two guide shafts (21 and 22; 21' and 22') extending in the Y direction (18) as well as mounting blocks (52, 53, 54; 56', 57') for the guide shafts (21 and 22; 21' and 22') and supporting blocks (56 and 57; 53' and 54') supporting the cross-feed carriage (19; 19') for displacement - are arranged in the spaces remaining between the hollow-section beams (46 and 69, or 47 and 71; 46' and 69', or 47' and 71') of the longitudinal carriage (13; 13') and the cross-feed carriage (19; 19'), the guide shafts (21 and 22; 21' and 22') extending approximately at the level of the horizontal longitudinal center plane of the hollow-section beams (46 and 47; 46' and 47') of the longitudinal carriage (13; 13').

2. Coordinate carriage according to claim 1, characterized in that the two guide shafts (21 and 22) are held, in fixed relationship to the longitudinal carriage, on mounting blocks (52, 53, 54) projecting laterally from the hollow-section beams (46 and 47) of the longitudinal carriage (13), and that the cross-feed carriage (19) is supported for displacement by means of spaced bearings (56) on the one guide shaft (21) and by means of corresponding bearings (57) on the other guide shaft (22).

3. Coordinate carriage according to claim 2, characterized in that the supporting blocks (86 and 87) containing the bearings (56 and 57) of the cross-feed carriage (19) are arranged on the inner, mutually opposite longitudinal sides of the hollow-section beams (69 and 71) of the cross-feed carriage (19).

4. Coordinate carriage according to claim 1, characterized in that the two guide shafts (21' and 22') are fixed in stationary relationship relative to the cross-feed slide, on mounting blocks (56' and 57') projecting downwardly from and fixed to the table (58') of the cross-feed carriage and that the supporting blocks (53' and 54') are provided laterally on the hollow-section beams (46' and 47') of the longitudinal carriage (13) for supporting the guide shafts (21' and 22') for displacement.

5. Coordinate carriage according to claim 4, characterized in that two mounting blocks (54') provided for supporting one of the guide shafts (21' and 22') each for displacement, are arranged in such a way that the tool axis (15) of the routing machine (12) coincides with the common vertical transverse center plane of these two mounting blocks (54'), and that two additional bearing blocks (53') of the longitudinal carriage (13') each supporting one of the guide shafts (21' and 22') for displacement are arranged on the ends of the hollow-section beams (46' and 47') of the longitudinal carriage (13') adjacent the longitudinal guide means (26', 62').

6. Coordinate carriage according to any of the preceding claims, characterized in that the bushes of sliding bearings, by means of which the longitudinal carriage (13; 13') is supported on the longitudinal guide shaft (25; 26') and/or by means of which the cross-feed carriage (19; 19') is supported on the longitudinal carriage (13; 13') in travelling relationship, are cast integrally with bores in bearing blocks having a clear diameter larger than the outer diameter of the bushes.

7. Coordinate carriage according to any of the preceding claims 4 to 6, characterized in that the guide shafts (21' and 22') are mounted on mounting blocks (56' and 57') exhibiting the shape of sectional rods and provided with downwardly open receiving grooves (101) having a clear cross-section in the form of a circular segment whose curved bottom is in close contact with an upper segment-shaped portion of the peripheral surface of the shaft, which is smaller than 180°, and that the sliding bearings arranged on the longitudinal carriage (13') are provided with bushes (103) encompassing the guide shafts (21' and 22') over a lower segment-shaped surface of more than 180°.

8. Coordinate carriage according to any of the preceding claims 1 to 6, characterized in that the guide shaft (26) of the longitudinal carriage (13; 13') and/or the guide shafts (21 and 22; 21' and 22') of the cross-feed carriage are cast into bores of mounting blocks (28 and 29 or 52, 53 and 54 or 53' and 54') having a clear diameter larger than the diameter of the guide shafts (26 or 21 and 22 or 21' and 22').

9. Coordinate carriage according to any of the preceding claims, characterized in that any gaps remaining between the table (58; 58') of the cross-feed carriage and the hollow-section beams (69 and 71; 69' and 71') of the cross-feed carriage (19; 19') supporting the said table are sealed by a self-curing synthetic resin mass.

10. Coordinate carriage according to any of the preceding claims, characterized in that the distance in the Y direction between the longitudinal guide means (26, 62; 26', 62') and the part (84) of the longitudinal carriage carrying the supporting roller (43) can be adjusted.

11. Coordinate carriage according to any of the preceding claims, characterized in that an electric drive motor driving the longitudinal carriage (13; 13') is arranged underneath an angle section (29; 29') which carries the longitudinal guide shaft (26; 26') and whose upwardly projecting leg (31) can be fixed to the machine table (11) and is arranged for driving, via a miter-wheel gearing, a pinion (67) revolving about a vertical axis and meshing with a toothed rod (68) extending along the lower edge of the downwardly directed leg of an angle section (62) which interconnects the sectional beams (46 and 47; 46' and 47') of the longitudinal carriage at their lower faces, outside the area of the machine table (11) and which carries the bearings (59 and 61; 53") by which the longitudinal carriage (13; 13') is supported on the longitudinal guide shaft (26; 26').

12. Coordinate carriage according to any of the preceding claims, characterized in that an electric drive motor (24) provided for driving the cross-feed carriage (19; 19') is arranged laterally and outside of the machine table (11), underneath the hollow-section beams (46 and 47; 46' and 47') of the longitudinal carriage (13; 13') and connected with the latter, and arranged for driving a pinion (78) revolving about a vertical axis and meshing with a toothed rod (79) which extends along the lower edge of the free end portion of the one hollow-section beam (69; 69') of the cross-feed carriage (19; 19') and is fixed to the latter.

13. Coordinate carriage according to claim 11 or claim 12, characterized in that the driving pinion (67 and/or 78) of the drive motor (23) of the longitudinal carriage and/or of the drive motor (24) of the cross-feed carriage is urged into meshing engagement with the toothed rod (68 or 79) of the drive by the action of a prestressed spring.

14. Coordinate carriage according to any of the preceding claims, characterized in that a photoelectric scanning head (83) being part of a follow-up control is arranged on the free end of one of the two hollow-section beams (69 or 71; 69' or 71') of the cross-feed carriage (19; 19'), a drawing pattern which can be scanned by means of the scanning head (83) being positioned on a support arranged below the scanning head (83).

15. Coordinate carriage according to any of the preceding claims 1 to 13, characterized in that there is provided a photoelectric scanning head (83') of a follow-up control which is fixed to the machine frame of the routing machine, and that a support (105) is provided for a drawing pattern which is to be scanned by the scanning head, the support being arranged laterally of the work table (58; 58') of the cross-feed carriage (19; 19') for displacement therewith.

## Revendications

1. Chariot en croix pour défonceuse permettant de déplacer une pièce sur le plan de travail en deux coordonnées perpendiculaires l'une par rapport à l'autre le long d'un contour ou face de mortaisage, le chariot en croix comprenant un chariot longitudinal déplaçable en direction X sur un dispositif de guidage, monté de façon fixe sur le bâti de la machine, par une commande de va-et-vient et un chariot transversal monté sur le chariot longitudinal déplaçable en va-et-vient, en direction Y, sur lequel la pièce à travailler est disposée de façon définie, caractérisé en ce que le chariot longitudinal (13; 13') comprend deux supports à profil creux (46 et 47; 46' et 47') disposés avec un certain écart latéral horizontal entre eux et parallèles en direction Y (18), de construction légère, reliés entre eux par un cadre résistant à la torsion et à la flexion, déplaçable, moyennant des paliers (59 et 61; 53") disposés avec un certain écart entre eux, sur un arbre de guidage (26; 26') fixé de façon desserrable latéralement sur une table de machine (11) de la défonceuse (12) et en dessous du niveau du plateau supérieur de la table et étayé de l'autre côté de la table de machine (11) par un rouleau d'appui (17) desserrable monté sur une tige d'appui (17) située du côté de la table et parallèle à l'arbre de guidage (26; 26'), que le chariot transversal (19; 19') déplaçable en direction Y (18) sur le chariot longitudinal (13; 13') comprend deux supports à profil creux (69 et 71; 69' et 71') disposés avec un certain écart latéral et parallèles en direction Y (18) et qui sont reliés de façon fixe entre eux moyennant une plaque de table (58; 58') traversant les supports à profil creux (46 et 47; 46' et 47') du chariot longitudinal avec un faible écartement de p. ex. 0,5 à 1 cm, les supports à profil creux (69 et 71; 69' et 71') ayant un certain écart latéral par rapport aux supports à profil creux contigus (46 ou 47; 46' ou 47') du chariot longitudinal (13; 13') et que les éléments de guidage - deux arbres de guidage (21 et 22; 21' et 22') s'étendant en direction Y (18), ainsi que des blocs support (52, 53, 54; 56', 57') pour les arbres de guidage (21 et 22; 21' et 22') et des blocs d'appui (56 et 57; 53'et 54') pour le logement mobile du chariot transversal (19; 19') - prévus pour l'étayage du chariot transversal (19; 19') et son guidage sur le chariot longitudinal (13; 13') sont disposés dans les espaces entre le chariot longitudinal (13; 13') et le chariot transversal (19; 19'), les arbres de guidage (21 et 22; 21'et 22') se trouvant à peu près au niveau du plan médian longitudinal horizontal des supports à profil creux (46 et 47; 46'et 47') du chariot longitudinal (13; 13').

2. Chariot en croix selon la revendication 1, caractérisé en ce que les deux arbres de guidage (21 et 22) sont fixés, de façon ferme sur des blocs support (52, 53, 54) faisant saillie sur le côté des supports à profil creux (46 et 47) du chariot longitudinal (13), et que le chariot transversal (19) est logé de façon mobile moyennant des paliers (56), disposés avec un certain écart l'un de l'autre, sur l'un des arbres de guidage (21) et moyennant des paliers adéquats sur l'autre arbre de guidage (22).

3. Chariot en croix selon la revendication 2, caractérisé en ce que les blocs support (86 et 87) contenant les paliers (56 et 57) du chariot transversal (19) sont disposés sur les faces intérieures opposées des supports à profil creux (69 et 71) du chariot transversal (19).

4. Chariot en croix selon la revendication 1, caractérisé en ce que les deux arbres de guidage (21' et 22') sont fixés de façon ferme sur les blocs support (56' et 57') fixés sur et faisant saillie vers le bas de la table porte-chariot transversal (58') et que des blocs d'appui (53' et 45'), disposés sur les côtés des supports à profil creux (46' et 47') du chariot longitudinal (13'), sont prévus dans lesquels sont logés de façon mobile les arbres de guidage (21' et 22').

5. Chariot en croix selon la revendication 4, caractérisé en ce que deux des blocs d'appui (54') prévus pour le logement d'un des arbres de guidage (21' et 22') sont disposés de telle sorte que l'axe de l'outil (15) de la défonceuse (12) se situe dans le plan médian transversal vertical commun de ces deux blocs d'appui (54') et que deux autres blocs d'appui (53') du chariot longitudinal (13') prévus pour le logement mobile d'un des arbres de guidage (21' et 22') sont disposés sur les extrémités, contigues au dispositif de guidage longitudinal (26', 62), des supports à profil creux (46' et 47') du chariot longitudinal (13').

6. Chariot en croix selon la revendication 1, caractérisé en ce que les coquilles de support de paliers à glissement moyennant lesquelles le chariot longitudinal (13; 13') est logé de façon mobile sur l'arbre de guidage longitudinal (26; 26') et/ou le chariot transversal (19; 19') sur le chariot longitudinal (13; 13') sont coulées dans des alésages de blocs d'appui dont le diamètre intérieur est supérieur au diamètre extérieur des coquilles de support.

7. Chariot en croix selon l'une des revendications 4 à 6 précédentes, caractérisé en ce que les arbres de guidage (21' et 22') sont fixés sur des blocs support (56' et 57') en forme de tige profilé muni de rainures (101) ouvertes vers le bas avec une section intérieure en forme de segment de cercle et sur le fond convexe desquelles reposent fermement les arbres (21' et 22') avec une partie supérieure, en forme de secteur de cercle inférieur à 180°, de son périmètre et que les paliers à glissement disposés sur le chariot longitudinal (13') sont munis de coquilles de support (103) enveloppant les arbres de guidage (21' et 22') sur un secteur inférieur de plus de 180° de leur périmètres.

8. Chariot en croix selon l'une des revendications 1 à 6 précédentes, caractérisé en ce que l'arbre de guidage (26) du chariot longitudinal (13; 13') et/ou les arbres de guidage (21 et 22; 21' et 22') du chariot transversal sont coulés dans des alésages de blocs d'appui (28 et 59 ou 52, 53 et 54 ou 53' et 54') dont le diamètre intérieur est supérieur au diamètre des arbres de guidage (26 ou 21 et 22 ou 21' et 22').

9. Chariot en croix selon l'une des revendications précédentes, caractérisé en ce que la fente restant entre la table porte-chariot transversal (58; 58') et les supports à profil creux (69 et 71; 69' et 71') du chariot transversal (19; 19') qui la supportent est remplie d'une matière à résine synthétique autodurcissante.

10. Chariot en croix selon l'une des revendications précédentes, caractérisé en ce que l'écart mesuré en direction Y entre le dispositif de guidage longitudinal (26, 62; 26', 62') et la partie du chariot longitudinal (84) portant le rouleau d'appui (43) est réglable.

11. Chariot en croix selon l'une des revendications précédentes, caractérisé en ce que un moteur électrique (23) prévu pour la commande du chariot longitudinal (13; 13') est disposé sous une cornière (29; 29') portant l'arbre de guidage longitudinal (26; 26') et pouvant être fixée sur la table de machine (11) avec son aile verticale (31), et entraînant, à travers un engrenage conique, un pignon (67) mobile sur un axe vertical et engrènant dans une crémaillère (68) disposée le long du bord inférieur de l'aile, dirigée vers le bas, d'une cornière (62) qui relie entre eux les supports à profil (46 et 47; 46' et 47') du chariot longitudinal par leur face inférieure en dehors de la zone de la table de machine (11) et qui porte les paliers (59 et 61; 53″) moyennant lesquels le chariot longitudinal (13; 13') est monté sur l'arbre de guidage longitudinal (26; 26').

12. Chariot en croix selon l'une des revendications précédentes, caractérisé en ce que un moteur électrique (24) prévu pour la commande du chariot transversal (19; 19') est disposé latéralement en dehors de la table de machine (11) en dessous des supports à profil creux (46 et 47; 46'et 47') du chariot longitudinal (13; 13') et relié avec ce dernier et entraînant un pignon (78) mobile sur un axe vertical qui engrène dans une crémaillère (79) disposée le long du bord inférieur de l'extrémité libre de l'un des supports à profil creux (69; 69') du chariot transversal (19; 19') et relié avec ce dernier.

13. Chariot en croix selon la revendication 11 ou 12, caractérisé en ce que le pignon d'entraînement (67 et/ou 78) du moteur de commande du chariot longitudinal (23) et/ou du moteur de commande du chariot transversal (24) est engrené dans la crémaillère (68 ou 79) par l'action d'un ressort précontraint.

14. Chariot en croix selon l'une des revendications précédentes, caractérisé en ce que une tête de balayage (83) photo-électrique, prévue dans le cadre d'un asservissement de poursuite est disposée sur l'extrémité libre de l'un des deux supports à profil creux (69 on 71; 69' ou 71') du chariot transversal (19; 19'), un dessin palpable moyennant la tête de balayage (83) se trouvant alors disposé sur une tablette en dessous de la tête de balayage.

15. Chariot en croix selon l'une des revendications 1 à 13, caractérisé en ce que une tête de balayage photo-électrique (83') d'un asservissement de poursuite reliée fermement avec le bâti de la défonceuse est prévue et que, pour le dépôt d'un dessin palpable moyennant la tête de balayage, une tablette (105), disposé à côté de la table de travail (58; 58') du chariot transversal (19; 19') et déplaçable avec ces derniers, est prévue.

Fig.1

Fig.2

Fig.3

Fig. 4

Fig. 5

Fig. 6

Fig.7

EP 0 121 123 B1

Fig. 8a

Fig. 8b

Fig. 8c